# EUROPEAN PATENT APPLICATION

(11) **EP 2 535 140 A2**
(43) Date of publication of application: **19.12.2012**
(21) Application number: 11172323.5
(22) Date of filing: 01.07.2011
(51) Int. Cl.: B23Q 1/48, B23Q 5/04, B23Q 5/32

(54) **Drilling machine**

(30) Priority: 13.06.2011 TW 100120577
(71) Applicant: Lin, Shun Sheng, Dali Dist. Taichung City 412 (TW)
(72) Inventor: Lin, Shun Sheng, Dali Dist. Taichung City 412 (TW)
(74) Representative: Beck & Rössig European Patent Attorneys

(57) **Abstract**

A drilling machine includes a stand unit (10), a drilling spindle unit (20), and a drive motor unit (30). A power control member (15) controls a drive motor (31) of the drive motor unit (30) so as to control the rotational speed of the drive motor (31). A driving shaft (310) of the drive motor (31) drives a driving shaft sleeve (22) of the drilling spindle unit (20) to bring a working spindle (210) in the driving shaft sleeve (22). The rotational speed of the drive motor (31) is controlled by the power control member (15) only. The present invention has a simple and endurable configuration, and is convenient for use and has stable configuration.

## Description

### BACKGROUND OF THE INVENTION

### 1. Field of the Invention

The present invention relates to a drilling machine.

### 2. Description of the Prior Art

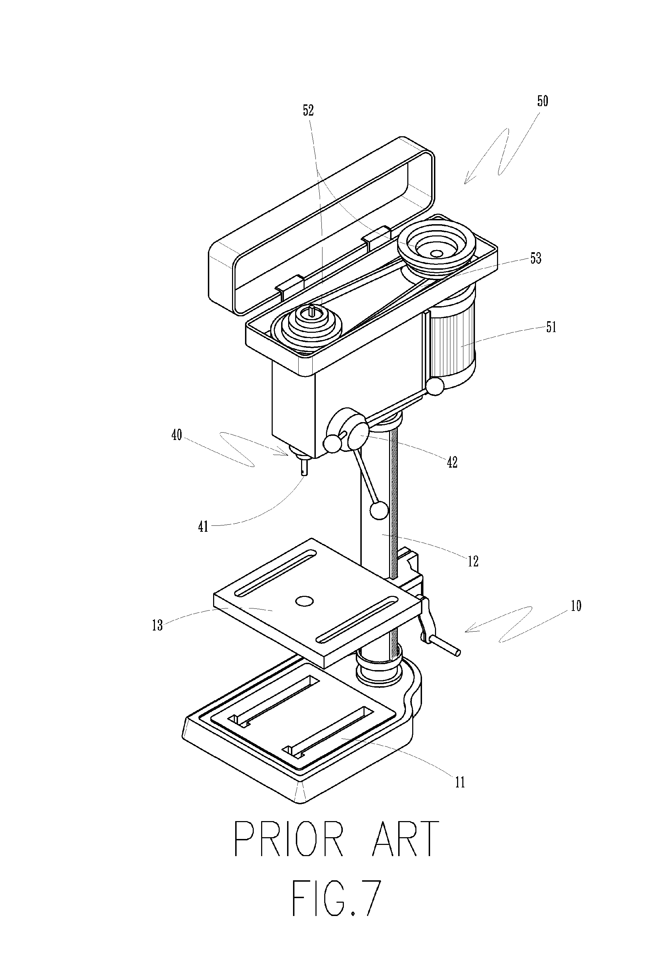

As shown in Fig. 7, a conventional drilling machine comprises a stand unit 10, a working spindle control unit 40 and a transmission unit 50. The stand unit 10 comprises a base 11, a displacement adjustment shaft 12 on the base 11, and a worktable 13 which can be moved up and down along the displacement adjustment shaft 12. The working spindle control unit 40 is disposed above the displacement adjustment shaft 12 of the stand unit 10. The working spindle control unit 40 comprises a working spindle 41 and a feed control member 42. The transmission unit 50 is disposed on top of the displacement adjustment shaft 12. The transmission unit 50 comprises a motor 51, pulleys 52, and a driving belt 53. The motor 51 drives the pulleys 52 and the driving belt 53, and the pulleys 52 link the working spindle 41 of the working spindle control unit 40. The rotational speed of feed is adjusted by the pulleys 52 and the driving belt 53. However, there are some problems existing in the conventional drilling machine.
1. Inconvenient Use: The motor drives the pulleys and the driving belt. The pulleys link the working spindle of the working spindle control unit. It is necessary to adjust the pulleys and the driving belt of the transmission unit when the adjustment of the rotational speed of feed is required. This is not convenient for use.
2. Unstable configuration: The motor drives the pulleys and the driving belt. The pulleys link the working spindle of the working spindle control unit. It is necessary to adjust the pulleys and the driving belt of the transmission unit when the adjustment of the rotational speed of feed is required. The belt easily breaks and needs replacement to influence the work efficiency, so its configuration is unstable.

Accordingly, the inventor of the present invention has devoted himself based on his many years of practical experiences to solve these problems.

### SUMMARY OF THE INVENTION

The primary object of the present invention is to provide a drilling machine which can overcome the problems existing is the prior art.

The drilling machine of the present invention comprises a stand unit, a drilling spindle unit, and a drive motor unit. The stand unit comprising a base, a displacement adjustment shaft on the base, a worktable which is moved up and down along the displacement adjustment shaft, and a working spindle control seat which is disposed at an upper end of the displacement adjustment shaft. The working spindle control seat has an insertion hole and a displacement control rotary member. A power control member is provided on an outer side of the working spindle control seat. The drilling spindle unit comprises a displacement control spindle sleeve and a driving shaft sleeve. The displacement control spindle sleeve comprises a working spindle. One end of the working spindle is provided with a link shaft, and another end of the working spindle is provided with a drilling clamp seat. The driving shaft sleeve has a positioning hole at one end thereof and an engaging hole at another end thereof. The positioning hole of the driving shaft sleeve is engaged with the link shaft of the displacement control spindle sleeve. The drive motor unit comprises a drive motor and a hollow motor seat. The drive motor includes a driving shaft. The drive motor unit is disposed on top of the working spindle control seat. The driving shaft of the drive motor is inserted in and engaged with the engaging hole of the driving shaft sleeve of the drilling spindle unit. The drive motor is electrically connected to the power control member of the stand unit.

The drive motor unit is disposed on top of the working spindle control seat of the stand unit. The second locking holes of the hollow motor seat are aligned with the coupling holes of the working spindle control seat, and the locking members of the drive motor are screwed to the coupling holes. The driving shaft of the drive motor is inserted in and engaged with the engaging hole of the driving shaft sleeve of the drilling spindle unit. The drive motor is electrically connected to the power control member of the stand unit. The power control member controls the drive motor of the drive motor unit so as to control the rotational speed of the drive motor. The driving shaft of the drive motor drives the driving shaft sleeve of the drilling spindle unit to bring the working spindle in the driving shaft sleeve. The rotational speed of the drive motor is controlled by the power control member only. The entire configuration of the present invention is simple and endurable, which is convenient for use and has stable configuration.

### BRIEF DESCRIPTION OF THE DRAWINGS

Fig. 1 is a perspective view according to a preferred embodiment of the present invention;
Fig. 2 is an exploded view according to the preferred embodiment of the present invention;
Fig. 3 is a partial exploded view showing the drilling spindle unit and the drive motor unit according to the preferred embodiment of the present invention;
Fig. 4 is a partial sectional view according to the preferred embodiment of the present invention;
Fig. 5 is a partial front view according to the preferred embodiment of the present invention in an operating state;
Fig. 6 is an exploded view showing another embodiment of the driving shaft sleeve of the present invention; and
Fig. 7 is a perspective view of a conventional drilling machine.

### DETAILED DESCRIPTION OF THE PREFERRED EMBODIMENTS

Embodiments of the present invention will now be described, by way of example only, with reference to the accompanying drawings.

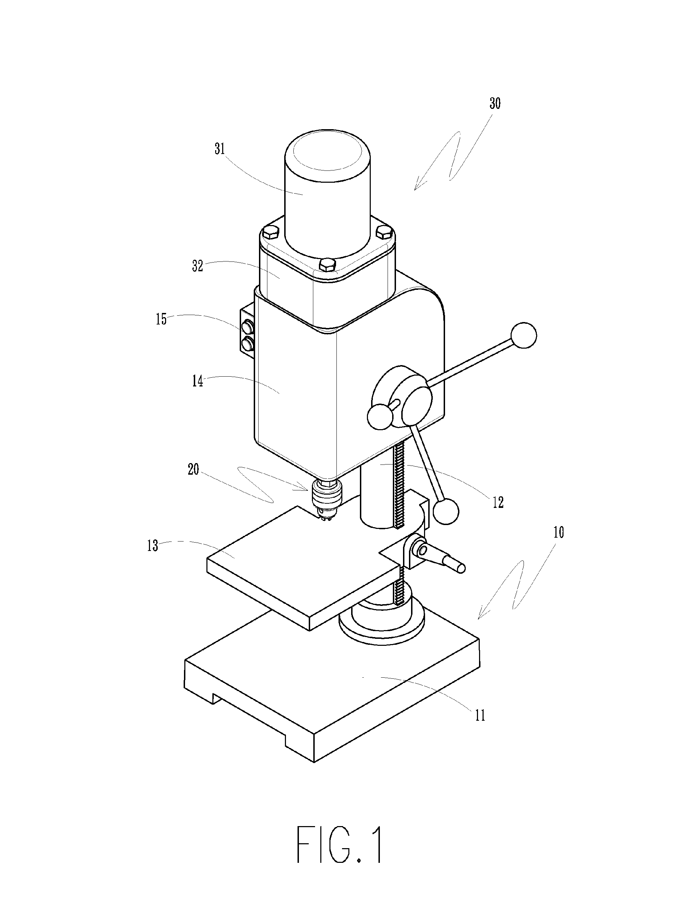

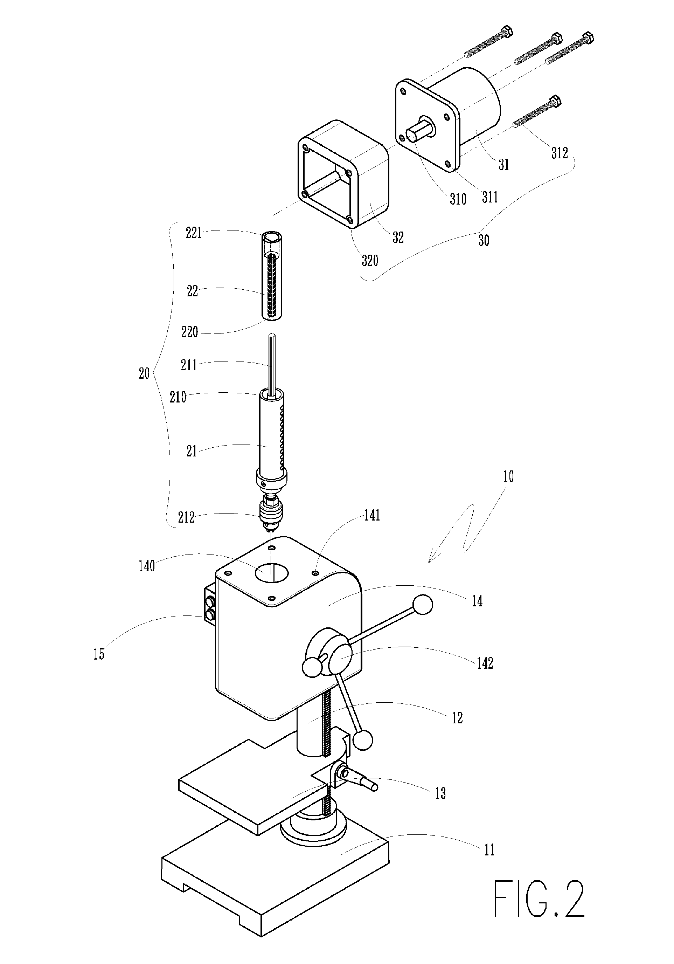

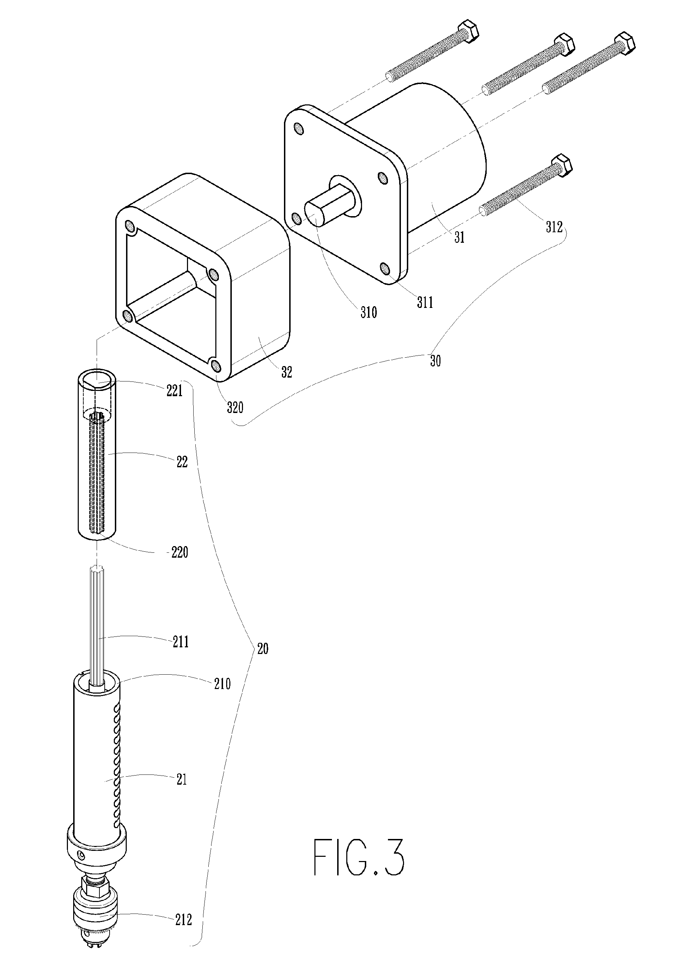

As shown in Fig. 1 through Fig. 4, the drilling machine according to a preferred embodiment of the present invention comprises a stand unit 10, a drilling spindle unit 20, and a drive motor unit 30.

The stand unit 10 comprises a base 11, a displacement adjustment shaft 12 on the base 11, a worktable 13 which can be moved up and down along the displacement adjustment shaft 12, and a working spindle control seat 14 which is disposed on an upper end of the displacement adjustment shaft 12. The working spindle control seat 14 has an insertion hole 140, a plurality of coupling holes 141, and a displacement control rotary member 142. A power control member 15 is provided on an outer side of the working spindle control seat 14.

The drilling spindle unit 20 comprises a displacement control spindle sleeve 21 and a driving shaft sleeve 22. The displacement control spindle sleeve 21 comprises a working spindle 210. One end of the working spindle 210 is provided with a link shaft 211, and another end of the working spindle 210 is provided with a drilling clamp seat 212. The driving shaft sleeve 22 has a positioning hole 220 at one end thereof and an engaging hole 221 at another end thereof. The positioning hole 220 of the driving shaft sleeve 22 is engaged with the link shaft 211 of the displacement control spindle sleeve 21.

The drive motor unit 30 comprises a drive motor 31 and a hollow motor seat 32. The drive motor 31 is an adjustable speed motor. The drive motor 31 includes a driving shaft 310 and a plurality of first locking holes 311 for insertion of locking members 312. The hollow motor seat 32 has a plurality of second locking holes 320 corresponding to the first locking holes 311 of the drive motor 31. The drive motor 31 is coupled to the hollow motor seat 32. The locking members 312 are inserted through the first locking holes 311 of the drive motor 31 and the second locking holes 320 of the hollow motor seat 32. The drive motor unit 30 is disposed on top of the working spindle control seat 14. The second locking holes 320 of the hollow motor seat 32 are aligned with the coupling holes 141 of the working spindle control seat 14, and the locking members 312 of the drive motor 31 are screwed to the coupling holes 141. The driving shaft 310 of the drive motor 31 is inserted in and engaged with the engaging hole 221 of the driving shaft sleeve 22 of the drilling spindle unit 20. The drive motor 31 is electrically connected to the power control member 15 of the stand unit 10. Thus, the drilling machine of the present invention is completed.

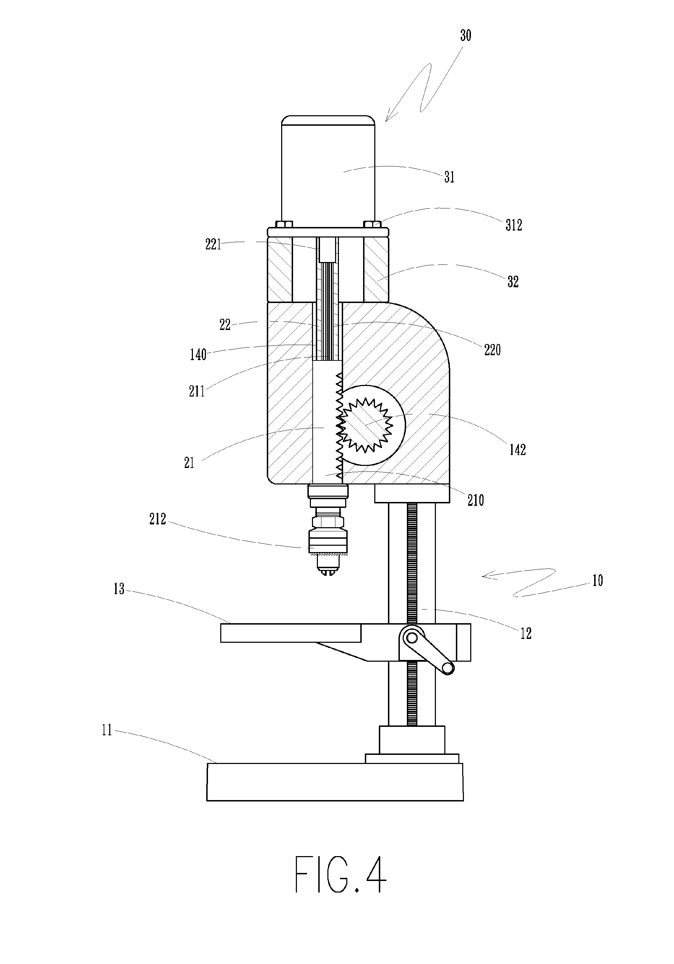

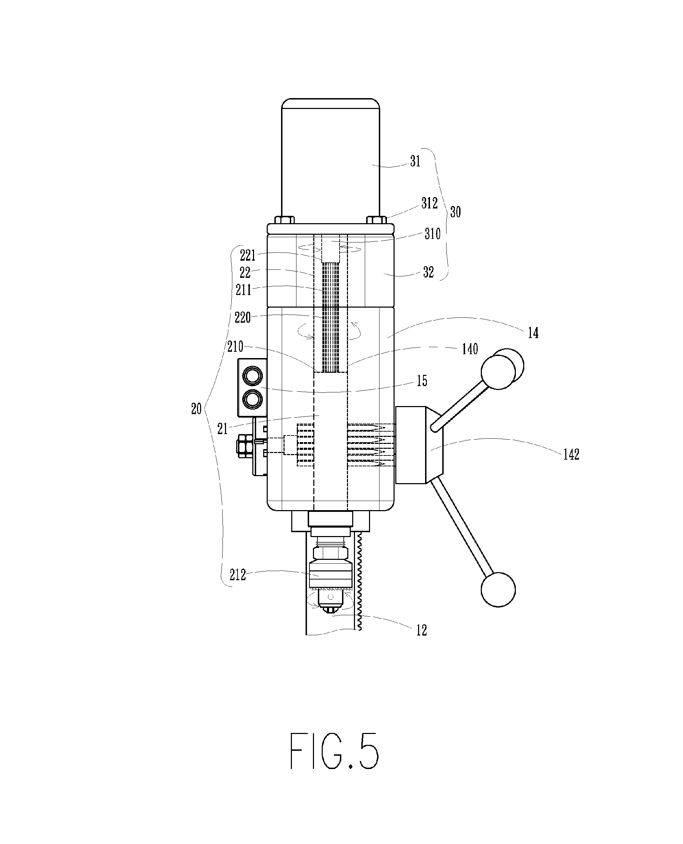

Fig. 4 is a partial sectional view according to the preferred embodiment of the present invention. Fig. 5 is a partial front view according to the preferred embodiment of the present invention in an operating state. The drive motor unit 30 is disposed on top of the working spindle control seat 14 of the stand unit 10. The second locking holes 320 of the hollow motor seat 32 are aligned with the coupling holes 141 of the working spindle control seat 14, and the locking members 312 of the drive motor 31 are screwed to the coupling holes 141. The driving shaft 310 of the drive motor 31 is inserted in and engaged with the engaging hole 221 of the driving shaft sleeve 22 of the drilling spindle unit 20. The drive motor 31 is electrically connected to the power control member 15 of the stand unit 10. The drive motor 31 of the drive motor unit 30 is electrically connected to the power control member 15 of the stand unit 10. The power control member 15 controls the drive motor 31 of the drive motor unit 30 so as to control the rotational speed of the drive motor 31. The driving shaft 310 of the drive motor 31 drives the driving shaft sleeve 22 of the drilling spindle unit 20 to bring the working spindle 210 in the driving shaft sleeve 22. The rotational speed of the drive motor 31 is controlled by the power control member 15 only. The entire configuration of the present invention is simple and endurable, which is convenient for use and has stable configuration.

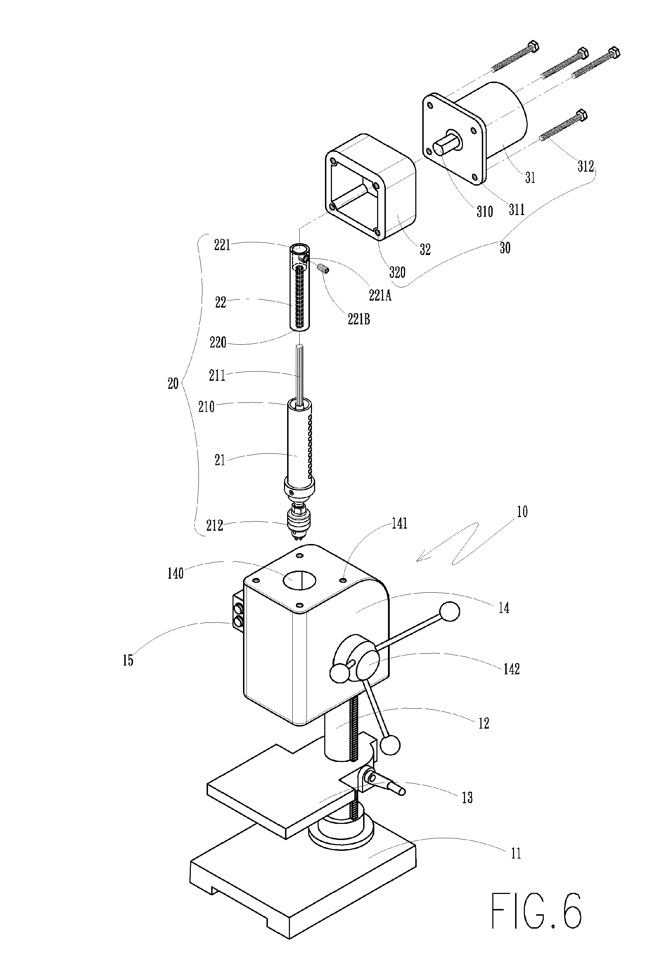

Fig. 6 is an exploded view showing another embodiment of the driving shaft sleeve of the present invention, which is substantially similar to the embodiment as shown in Fig. 1 through Fig. 4 with the exceptions described hereinafter. The driving shaft sleeve 22 of the drilling spindle unit 20 has a fastening hole 221A at an outer side of the engaging hole 221 for insertion of a fastening member 221B. The driving shaft 310 of the drive motor unit 30 is inserted in the engaging hole 221 of the driving shaft sleeve 22 and fastened by the fastening member 221B which is inserted through the fastening hole 221A, so that the driving shaft 310 of the drive motor unit 30 is steady engaged in the engaging hole 221 of the driving shaft sleeve 22.

In an alternative embodiment the drilling machine comprises at least a stand unit comprising a working spindle control seat 14, while the layout of the stand may differ from the design shown in the drawings. Further, this drilling machine comprises a drilling spindle unit 20 which is slidably mounted on the working spindle control seat 14 and movable relative thereto by means of a displacement control rotary member 142, wherein the drilling spindle unit 20 comprises a displacement control spindle sleeve 21 and a driving shaft sleeve 22. The displacement control spindle sleeve has a working spindle 210 which at one end is provided with a link shaft 211 and at the other end with a drilling clamp seat 212. The driving shaft sleeve 22 may having a positioning hole 220 at one end thereof and an engaging hole 221 at another end thereof. The positioning hole 220 of the driving shaft sleeve 22 is engaged with the link shaft 211 of the displacement control spindle sleeve 21. Further the drilling machine of the alternative embodiment comprises a drive motor 31 including a driving shaft 310 while the above mentioned hollow motor seat 32 can be omitted. The drive motor 31 is disposed on top of the working spindle control seat 14. The driving shaft 310 of the drive motor 31 is inserted in and engaged with the engaging hole 221 of the driving shaft sleeve 22 of the drilling spindle unit 20.

The present invention has the following advantages:
1. Convenient use: The power control member controls the drive motor of the drive motor unit so as to control the rotational speed of the drive motor. The driving shaft of the drive motor drives the driving shaft sleeve of the drilling spindle unit to bring the working spindle in the driving shaft sleeve. The rotational speed of the drive motor is controlled by the power control member only. This is very convenient for use.
2. Stable configuration: The power control member controls the drive motor of the drive motor unit so as to control the rotational speed of the drive motor. The driving shaft of the drive motor drives the driving shaft sleeve of the drilling spindle unit to bring the working spindle in the driving shaft sleeve. The rotational speed of the drive motor is controlled by the power control member only, not driven by the transmission unit. The configuration of the present invention is simple and stable.

Although particular embodiments of the present invention have been described in detail for purposes of illustration, various modifications and enhancements may be made within the scope of the claims. Accordingly, the present invention is not to be limited except as by the appended claims.

## Claims

1. Drilling machine, comprising:
a stand unit (10) comprising a working spindle control seat (14),
a drilling spindle unit (20) which is slidably mounted on the working spindle control seat (14) and movable relative thereto by means of a displacement control rotary member (142),
wherein the drilling spindle unit (20) comprises a displacement control spindle sleeve (21) and a driving shaft sleeve (22), the displacement control spindle sleeve (21) comprising a working spindle (210), one end of the working spindle (210) being provided with a link shaft (211) and another end of the working spindle (210) being provided with a drilling clamp seat (212), the driving shaft sleeve (22) having a positioning hole (220) at one end thereof and an engaging hole (221) at another end thereof, the positioning hole (220) of the driving shaft sleeve (22) being engaged with the link shaft (211) of the displacement control spindle sleeve (21); and
a drive motor (31) including a driving shaft (310), wherein the drive motor (31) is disposed on top of the working spindle control seat (14) and the driving shaft (310) of the drive motor (31) is inserted in and engaged with the engaging hole (221) of the driving shaft sleeve (22) of the drilling spindle unit (20).

2. Drilling machine according to claim 1, **characterised in that** the stand unit (10) comprises a base (11), a displacement adjustment shaft (12) on the base (11), a worktable (13) which is movable up and down along the displacement adjustment shaft (12), and said working spindle control seat (14) which is disposed at an upper end of the displacement adjustment shaft (12), the working spindle control seat (14) having an insertion hole (140) and said displacement control rotary member (142).

3. Drilling machine according to claim 1 or 2, **characterised by** a drive motor unit (30) comprising said drive motor (31) and a hollow motor seat (32), wherein the drive motor unit (30) is disposed on top of the working spindle control seat (14).

4. Drilling machine according to one of claims 1 to 3, **characterised in that** a power control member (15) is provided on an outer side of the working spindle control seat (14) of the stand unit (10) and the drive motor (31) is electrically connected to said power control member (15) of the stand unit (10).

5. Drilling machine as claimed in claim 3 or 4, **characterised in that** the working spindle control seat (14) has a plurality of coupling holes (141), the drive motor (31) including a plurality of first locking holes (311) for insertion of locking members (312), the hollow motor seat (32) having a plurality of second locking holes (320) corresponding to the first locking holes (311) of the drive motor (31), the drive motor (31) being coupled to the hollow motor seat (32), the locking members (312) being inserted through the first locking holes (311) of the drive motor (31) and the second locking holes (320) of the hollow motor seat (32), the second locking holes (320) of the hollow motor seat (32) being aligned with the coupling holes (141) of the working spindle control seat (14), the locking members (312) of the drive motor (31) being screwed to the coupling holes (141).

6. Drilling machine as claimed in one of claims 1 to 5, **characterised in that** the driving shaft sleeve (22) of the drilling spindle unit (20) has a fastening hole (221A) at an outer side of the engaging hole (221) for insertion of a fastening member (221B), the driving shaft (310) of the drive motor unit (30) being inserted in the engaging hole (221) of the driving shaft sleeve (22) and fastened by the fastening member (221B) inserted through the fastening hole (221A).

7. Drilling machine as claimed in one of claims 1 to 6, **characterised in that** the drive motor (31) is an adjustable speed motor.

8. Drilling machine as claimed in one of claims 1 to 7, **characterised in that** the axis of rotation of the drive motor (31) is in line with the axis of rotation of the with the drilling clamp seat (212).
